# EUROPEAN PATENT SPECIFICATION

(11) **EP 2 908 611 B1**
(45) Date of publication and mention of the grant of the patent: **29.03.2017**
(21) Application number: 15154779.1
(22) Date of filing: 12.02.2015
(51) Int. Cl.: H05B 37/02, H04W 4/04, H04W 4/00, G01S 5/02

(54) **A DEVICE FOR LOCATING AND IDENTIFYING OBJECTS IN A ROOM AND ALLOWING ACCESS TO A CONTEXTUAL SERVICE**
VORRICHTUNG ZUR LOKALISIERUNG UND IDENTIFIZIERUNG VON OBJEKTEN IN EINEM RAUM UND ERMÖGLICHUNG DES ZUGANGS ZU EINEM KONTEXTUELLEN DIENST
DISPOSITIF PERMETTANT DE LOCALISER ET D'IDENTIFIER DES OBJETS DANS UNE PIÈCE ET DE PERMETTRE L'ACCÈS À UN SERVICE CONTEXTUEL

(30) Priority: 15.02.2014 SE 1450177
(43) Date of publication of application: 19.08.2015
(73) Proprietor: Nordic Light Ab, 931 24 Skellefteå (SE)
(72) Inventor: Sköld, Niclas, 931 54 Skellefteå (SE); Lindström, Henrik, 932 50 Bureå (SE)
(74) Representative: Zacco Sweden AB

(56) References cited:
- US-A1- 2008 037 241
- US-A1- 2011 001 436
- US-A1- 2013 088 168

## Description

The invention concerns an arrangement according to the introduction to claim 1. In one embodiment of the invention according to claim 11, an object may comprise a light fitting.

The ability to determine the geographical position of moveable objects in wireless networks has made it possible to offer an object a position-based or position-conscious service that depends on the service area in which an object equipped with radio is located.

Equipped with an identification element that functions at short-range radio frequencies, such as an RFID tag or an ID transponder, an object forms what is known as a "node", which can be followed in a short-range radio-based system. A transmitter/receiver that functions at short-range radio frequencies and that has been deployed in an appropriate manner can form a base station (BS) for a spontaneous wireless personal computer network. With the aid of one or several transmitters/receivers that function as locators, identification elements that are located in the network within a service region can be identified and geographically located. The term "short-range radio system" will be used in the following to denote what is known as a "wireless personnel area network" (abbreviated as "WPAN") according to IEEE 802.11 or similar standard. The term "service region" is used to denote a landscape or a region whose areal extent has been pre-determined, i.e. in practice a cell area or well-defined geographical zones that can be limited between several interacting transmitters/receivers that have the ability to forward (link) radio communication between each other. In order to allow external communication with the personal network, at least one of the transmitters/receivers that are components of a system is in connection with a fixed network over, for example, Ethernet.

For the estimation of the geographical position of an identification element, methods can be used that measure the time differences (TD) that arise between an identification element that has been associated with an object. At request from a transmitter/receiver, the position of the identification element within a defined cell area can in this way be determined with relatively high accuracy.

The estimation of position and the localisation of an identification element are normally based on the radio conditions between the majority of at least three interacting transmitters/receivers, whereby the exact geographical position of the transmitter/receiver is known.

The most fundamental localisation technique is to identify the location based on the mobile network node that is closest to the object. This normally takes place by examining the association between the object and the mobile network node or by measuring the signal strength.

Triangulation and similar time-difference methods normally use signals that are derived from an identification element, which signals are simultaneously received by several transmitters/receivers. Geographical position can be determined by triangulation by measuring distances and angles to an identification element using at least three positions with known positions. During trilateration, the relative or the absolute difference in the time that it takes for a signal from an identification element, on response to a request, to propagate from the identification element to finally reach each transmitter/receiver is measured. One advantage of trilateration over triangulation is that a free line of sight is not necessary, which means that trilateration is normally selected for indoor installations in buildings. The "time difference of arrival" (abbreviated "TdoA") is calculated from the propagation time of the signals in the relevant medium. Radio waves propagate at a known speed through a wireless medium. During trilateration, the signal strength or timing information from several access points can be used in combination in order to form a coverage circle and points of division, whereby the distance from at least three different positions can be calculated.

In one embodiment, the present invention may be used in combination with light fittings, whereby each such light fitting can form an object with which an identification element may be associated. The said service regions can be constituted by defined external and internal frames of reference for light fittings, i.e. compartments, regions or corridors in a building whose illumination is intended to be regulated, to be illuminated and extinguished in a context, i.e. in a pre-determined manner that depends on various circumstances, situations or contexts that may be event-controlled. A particularly interesting field of use for remote-controlled light fittings is the type of radio-controlled fitting that is a component of remote-controlled lighting systems and that is intended for contextual use. Each such light fitting contains electronic circuits that allow it to be remotely controlled in a number of different ways, with respect to, for example, the colour of light emitted, the light intensity, etc. It is common also that light fittings of this type are controlled in a context, i.e. based on circumstances, surroundings or the overall situation, which may include a clock or a lightmeter, whereby the light is reduced during the day when the need for light is lower and allowed to shine more intensely during the night. One large field of use for such control and regulatory systems is in retail premises.

Retail premises can demonstrate a context that includes a number of illumination groups arranged in a hierarchy, which may include, for example, principal groups and subgroups. A first service region may be constituted by an external frame of reference defined as the total surface area on one floor, such as the ground floor, of a shop. Other floors, where present, can form second, third, etc. service regions. This first service region can be limited by the outer zone of the retail premises, for example, the walls of the premises. The external frame of reference or the first service region may be divided into a number of underlying internal frames of reference, i.e. in principle illumination zones that form subregions within the first service region on a floor. These underlying service regions may include, in retail premises, a menswear department, a ladieswear department, a make-up department, display windows, etc., and one or several corridors that unite the said departments. Such regions in a service region will below be referred to as first, second, third, etc., illumination zones.

In certain cases, it is a case also of an ability to control and monitor the light emitted between different floors in a building. It is desirable to control the light in each one of these illumination zones differently within different illumination zones, whereby the said illumination zones can in turn be divided into what are known as "illumination groups", and, in certain cases, into even smaller subgroups. In the case of lighting systems, the focus in most cases is on achieving a control system that makes it possible to control and regulate the light intensities dynamically, depending on wishes and requirements. By introducing different sections into premises, such as a shop, the light intensities can be regulated according to the needs of each section or department.

Prior art arrangements for the localisation and identification of objects in a room and that allow access to a contextual service for an approved object that is located in the room often create problems during installation. The problems are common in most of the prior art systems, independently of the type of object with which an identification element is associated. They become, however, particularly obvious during the installation of remote-controlled illumination systems.

One of the more common problems that can arise is the case in which two neighbouring shops carry out installation at the same time, whereby the problem may arise during activation of a light fitting that a fitting that lacks a defined subnetwork cannot be added to a lighting system without uncertainty arising. To be more precise, the question arises whether the light fitting in question belongs to the shop in question or to the neighbouring shop.

Until now, this problem has been solved by assigning during installation each light fitting that is a component a network mask address, i.e. an IP address such as a CIDR address, whereby the fitting is defined to belong to a certain installation with a specific hardware connection to the relevant network. Even though this technology has turned out to function adequately, it suffers from the disadvantage that it is far too complicated and troublesome to use, not only for manufacturers of light fittings but also for end users, customers and shop owners.

A system as described here above is known from US 2008/0037241 A1. This document discloses a radio detection system in which an identifier is associated to an object in the form of lightning fixture. The function of the system is static in that each identifier in advance is assigned a unique network mask address, i.e. an IP address that belong to a certain installation such as a desired light scene in a geographically defined light zone. In practice the identifier is assigned its unique network mask address, i.e. at the manufacturing factory or at the site of installation before the system is taken in operation. During installation the identifier is assigned with a specific hardware connection to the relevant network.

A second problem arises during service or exchange of individual light fittings in an illumination group, since complete control and programming of the network mask address (the IP address) that is in accordance with the fitting that has been exchanged is required during the production process, before the product can be sent to the customer for installation in the shop.

A further problem with prior art systems is the method used during installation and the maintenance of correct positions for each source of light in the control system during its operative lifetime. It may be occasionally necessary that light fittings be moved between different compartments in premises in order to temporarily increase the light intensity at particular objects in the premises due to rebuilding or changes in the layout. Such changes require regular updates of the positions in the control system to achieve correct control of the lights (the fittings). One problem is that this type of change generally requires an update of the positions of the light fittings in the control system, which involves relatively extensive work. One troublesome circumstance is that it is not always the same personnel who maintain the system who also physically move the points of illumination in the premises. This, of course, makes it even more difficult to keep the system updated. The risk of erroneous information, together with complicated installation procedures, have meant that radio-based lighting systems that allow access to contextual services depending on position or identity have not yet become well-established on the market.

One purpose of the present invention, therefore, is to achieve an arrangement for the localisation and identification of objects in a room that can be limited by an external frame of reference and possibly one or several internal frames of reference located within the external frame of reference, and that allows access to a contextual service for an approved object that is located within any one of the said frames of reference in the room. This purpose of the invention is achieved through an arrangement that demonstrates the distinctive features and characteristics that are specified in claim 1. A second purpose of the invention is to achieve a positioning system for remote-controlled light fittings. This is achieved through an arrangement that demonstrates the distinctive features and characteristics that are specified in claim 13.

Thus, it is a case of using present technology in all infrastructure for communication and in all contextual services that are able to use information about at least one of the position and the identity of a moveable object in order to at least one of create, control access to and adapt certain data of the said service. The first transmitters/receivers, i.e. the "locators", a minimum of three such, that are components of the technological solution may be integrated into shelves or similar equipment in a shop, and an identification element, a "node", may be integrated into a customer trolley, whereby a customer who propels the trolley can be offered contextual services such as customer-adapted advertising that is presented on a display on the trolley, depending on the previously logged purchasing habits of the customer and how the customer moves through the premises. The second transmitters/receivers, one or several, that is or are components of the technological solution, i.e. each "base station", may be integrated on a floor in a building in order to monitor a service region in which the said shop is located.

The invention is carried out according to independent claim 1.

Even if the present invention is described in the form of an embodiment that concerns the monitoring and control of light fittings, it should be realised that the technology is not limited specifically to this, and that it can be used in several different contexts.

The invention will be described below in more detail under the guidance of an embodiment and with reference to attached drawings, of which:
Figure 1 shows schematically the architecture of an arrangement for the localisation and identification of an object in the form of a light fitting and that allows access to a contextual service during the use of the position and identity of the light fitting according to the present invention,
Figure 2 shows schematically a first service region on a floor in a building divided into a number of geometrically limited cells with pre-determined geometrical forms, each one of which cells includes an illumination group of remote-controlled light fittings,
Figure 3 shows a block diagram for an identification element or node that functions at short-range radio frequencies and that is intended to be associated with an object in an arrangement according to the invention,
Figure 4 shows a block diagram for a first transmitter/receiver or "identifier" that functions at short-range radio frequencies and that is intended to be a component in an arrangement according to the invention,
Figure 5 shows a block diagram for a second transmitter/receiver or "base station" that functions at short-range radio frequencies and that is intended to be a component in an arrangement according to the invention,

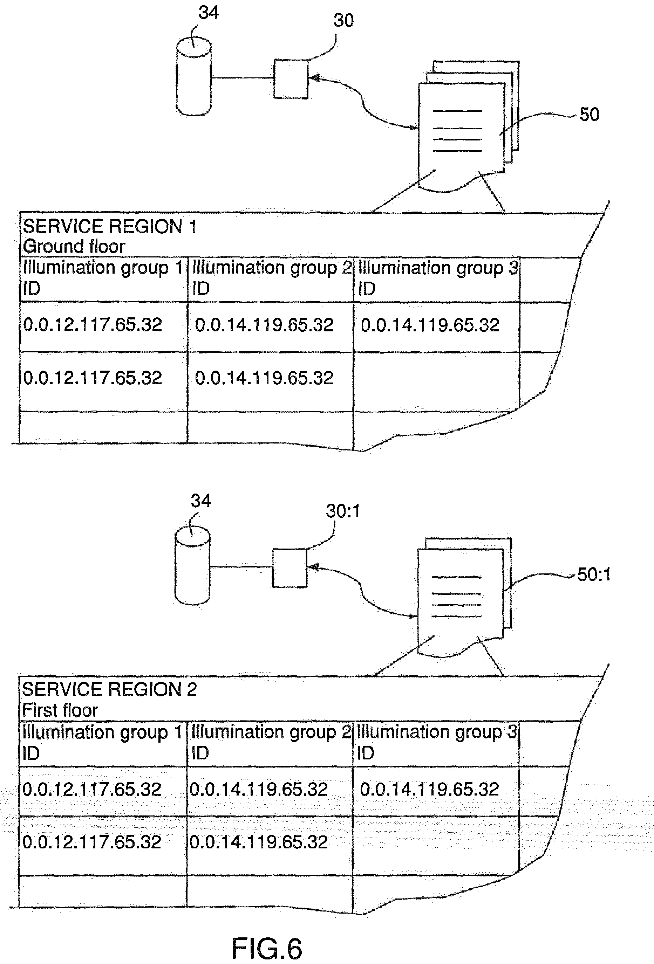

Figure 6 shows lists of IDs of identification elements associated with objects that are constituted in this case by light fittings that are members of a network, that have been approved for a specific service region and that have in this way been given access to contextual services according to the invention.

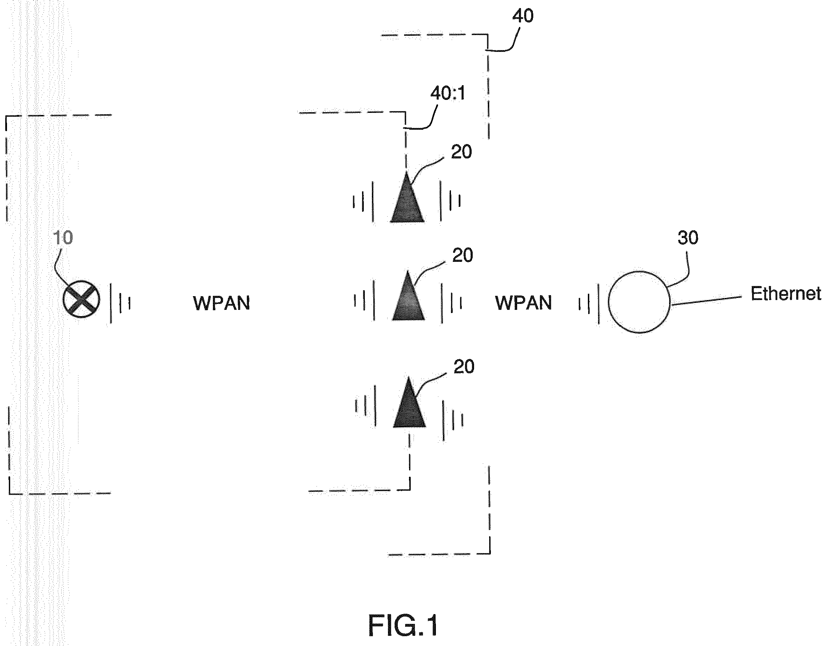

Figure 1 shows schematically the architecture of an arrangement for the localisation and identification of objects in a room that can be limited by an external frame of reference and possibly one or several internal frames of reference located within the external frame of reference, and that allows access to a contextual service for an approved object that is located within any one of the said frames of reference in the room. The term "room" is used in the following to denote any three-dimensional compartment, whereby it should be realised that the technology is not limited to being used inside in a building: it can be used also outside of a building. It should be realised also that the expression "frame of reference" denotes the interior of a perimeter of overlapping radio areas within a network, which perimeter has been given a pre-determined form with the aid of software. Each position in a coordinate system in a plane, and thus also imaginary perimeter-based boundary regions with closed geometrical forms, can, with the aid of triangulation, be located in a coordinate system, on the condition that at least three positions have been geographically pre-determined in the system.

The arrangement principally includes one or several identification elements 10 (nodes) that function at short-range radio frequencies and that are intended to be associated with an object, which may, of course, include any object at all, including a physical individual. In the present embodiment of the invention, however, the object relates to a light fitting that is to be identified and located in the premises. Furthermore, the arrangement includes several first transmitters/receivers 20 (identifiers or locators) that function at short-range radio frequencies and that are intended to be distributed throughout the premises that are to be monitored, and that allow a compartment in the form of an external or internal frame of reference (40; 40:1) to be formed. The geographical position of each first transmitter/receiver is known to the internal frame of reference 40:1 that the said first transmitter/receiver limits and that is defined by an area of radio frequency coverage between the said transmitters/receivers. Slave transmitters (not shown in the drawings) can, of course, be arranged between the said transmitters/receivers 20, 30 in order to improve the range.

Each first transmitter/receiver 20 comprises a first calculation means 23 for the localisation of an identification element 10 and the creation of measurement results based on the measured time difference (TD) for radio waves from the identification element to reach the respective first transmitter/receiver when responding to a request. The arrangement includes also one or several second transmitters/receivers 30 (base stations) that function at short-range radio frequencies and that can communicate with the said first transmitters/receivers 20. It should be realised that, deployed in the room that is to be monitored, the said first transmitters/receivers 20 allow also the said external frame of reference 40 described above to be formed, whereby the number and geographical location of each first transmitter/receiver 20 are known also to the external frame of reference 40 that limits a service region.

The arrangement comprises second calculation means 33 for the calculation of the position of the identification element 10 based on measurement results that are obtained from the first transmitter/receiver 20. A second calculation means 33 is integrated into the second transmitter/receiver 30. Requests to the identification element 10 take place on commission from the said second transmitters/receivers 30 through the series of first transmitters/receivers 20 that are deployed in the room.

The measurement results that the first calculation means 23 creates in each first transmitter/receiver 20 is constituted by vector data in the room 40:1 and may include the mathematical parameters time and signal strength or magnitude and direction from each first transmitter/receiver 20 to the identification element 10. Vector data that the first calculation means 23 creates in each first transmitter/receiver 20 is time-based, in which also the mathematical parameters magnitude and direction include time vector data. The second calculation means 33 of the second transmitter/receiver 30 calculates the position of the identification element 10 in the room, based on the time-based vector data that have been received from each first transmitter/receiver 20.

The second transmitter/receiver 30 comprises means that, based on the position in the room of the identification element 10 that has been determined, can, firstly, determine whether the identification element lies within the external frame of reference 40, i.e. a perimeter in a coordinate system that limits a service region such as a floor in a building, and, secondly, determine whether the identification element lies within any internal frame of reference 40:1 that may be present, i.e. a perimeter in the coordinate system that limits a smaller shop area or parts of this within t3he building. The second transmitter/receiver 30 comprises second calculation means 33 that, depending on the position in the room that has been determined, can approve or reject the identification element 10 that has been located, and in the event of approval can assign a pre-determined network address to the identification element. Depending on the specified network address of the identification element 10, a pre-determined contextual service is transferred from a database 34 that is associated with the second transmitter/receiver 30, to an approved identification element 10. The said transferred data are in this way stored in the memory part 13 of the identification element 10.

The arrangement comprises calculation means 11, 13; 21, 23; 31, 33 for the localisation of an identification element 10 and the creation of measurement results that are based on trilateration, whereby the relative or the absolute difference in the time it takes for a signal from the identification element, on its response to a request, to propagate from the identification element to each first transmitter/receiver 20 is measured, in a series of at least three units in order to be able to carry out the positional calculations required. During the creation of measurement results, communication takes place between the second transmitter/receiver 30 and each identification element 10 by linking through the said series of first transmitters/receivers 20.

The second transmitter/receiver 30 comprises means 32 for data communication with an external network over, for example, Ethernet.

An embodiment of the arrangement in combination with light fittings will be described below, whereby access to a contextual service is granted based on the use of the position of the light fitting in a coordinate system and its identity. A geographical region in a room, floor or premises can be divided into a number of geometrically limited cells 40; 40:1 with a pre-determined geometrical form, each one of which may include an illumination group of remote-controlled light fittings. The radio system that is intended to be used works at short range and is of the type that offers licence-free frequency bands and wireless personal computer networks known as "wireless personnel area networks" (abbreviated as "WPANs").

Such systems have the advantage that they allow, with low energy consumption, the transfer of simple messages and data between different identification elements 10 that operate digitally. The system is described based on the use of what are known as "ad-hoc protocols" and a spontaneous wireless network, whereby the identification elements 10 do not need to know in advance the topology of the network around them. The identification elements 10 listen for transmitted messages ("hello" messages) from each first transmitter/receiver 20, whereby the identification element broadcasts its presence. Each identification element 10 has a unique identity, an ID number in the form of an appropriate electronic network, such as 0.0.12.117.65.32. According to the present invention, each light fitting is equipped with an identification element 10, in the form of, for example, an ID-transponder with a pre-determined identity. The identification element 10 is equipped with a power supply unit 14 that can receive power from the electrical network to which the light fitting is connected, at for example, 230 volt. Alternatively, the identification element may be arranged for battery-powered operation. The said supply of power and the transmission of data can take place over an interface in the form of a communication module 12 between the identification element 10 and the control and operating electronic circuits of the light fitting.

Due to the fact that an identification element 10 is associated with a light fitting, the said light fitting demonstrates a unique ID number. The light fitting can be equipped with this ID number during its manufacture at the factory. Due to the ID number, the light fitting can be freely added to and removed from particular illumination groups, in any service region or structurally underlying region at all in an illumination system.

With reference to Figure 1, the present arrangement can, in an embodiment given as an example, principally consist of three types of unit.
- one or several identification elements 10 with a pre-determined identity, and suitable for use to label a specific light fitting intended for remote control. The task of each identification element 10 is to control and report from the light fitting that is connected, according to context that has been determined in advance.
- several first transmitters/receivers 20, identifiers (locators), i.e. moveable units equipped with first calculation means 23 to locate an identification element with the aid of trilateration, and means 21 for dynamic short-range radio communication
- one or several second transmitters/receivers 30, (base stations) whose task is to manage the control of the illumination system, and which transmitters/receivers are equipped with means 31 for dynamic short-range radio communication, second calculation means 33 in order to geographically locate an identification element 10 with the aid of data that have been received from the said first transmitters/receivers 20, a database 34 for the storage of the selected illumination groups with particular contexts within a service region, and means 32 for the static transmission of data to a fixed computer network.

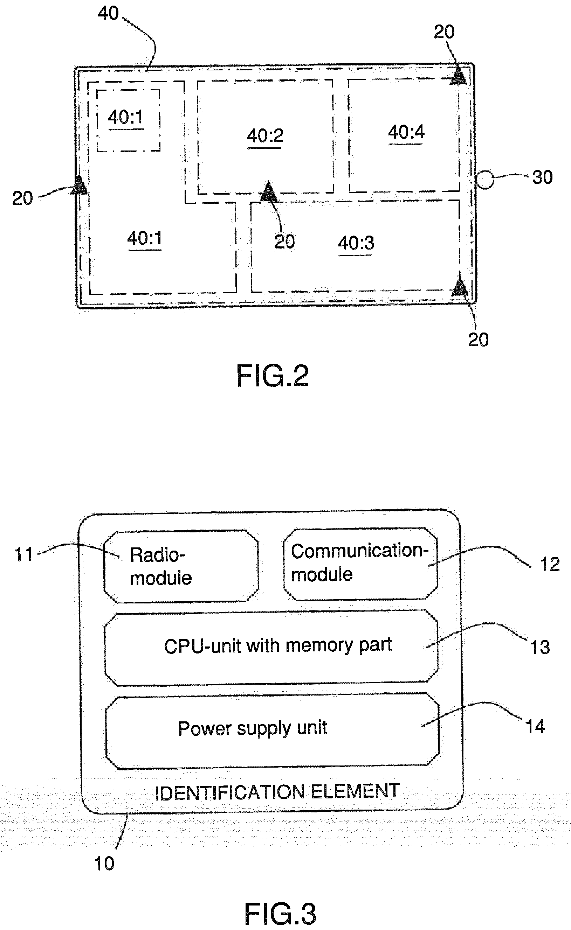

With reference to Figure 3, each identification element 10 has the task of controlling and reporting from an associated light fitting according to a context of instructions issued and transferred from the database 34 of the second transmitter/receiver 30. The communication module that is a component of the identification element 10 has an interface for data communication and the transmission of power to the electronic circuits of the light fitting. An identification element 10 principally comprises the following parts:
- a radio module 11 for short-range radio communication
- a communication module 12 that forms an interface for the transmission of power and data to the electronic circuits of the light fitting
- a CPU with a memory part and a protocol stack 13
- a power supply unit 14 intended to be connected to the public electricity supply at, for example, a grid voltage of 230 V.
The radio module 11 of the identification element 10 is normally held in its listening condition, also known as the "hibernated" condition, which means that the radio transmitter is inactive and the unit is listening to incoming activation signals from the said first transmitters/receivers 20. The radio module 11 of the identification element 10 is activated in the event of radio contact and it replies with its identification (ID), after which it returns to hibernation.

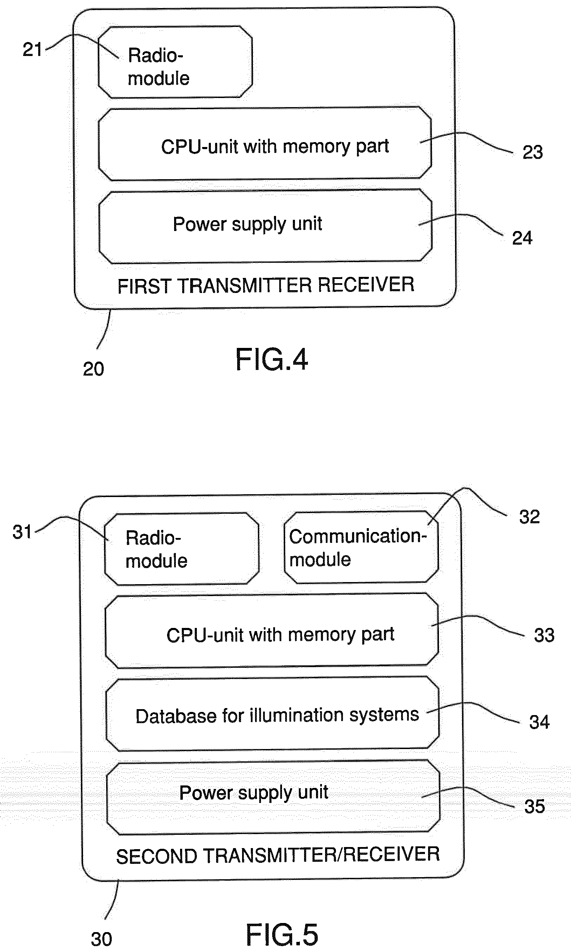

Figure 4 shows in more detail the architecture of the first transmitter/receiver 20 that is a component of the present invention. The first transmitter/receiver 20 is a unit that is used to locate an identification element 10 with the aid of trilateration. The first transmitter/receiver 20 can be used to forward (link) communication between the second transmitter/receiver 30 and an identification element 10. Each first transmitter/receiver 20 principally demonstrates the following parts.
- a radio module 21 for short-range radio communication
- a CPU unit with a memory part 23
- a power supply unit 24 intended to be connected to a public electricity supply at, for example, a grid voltage 230 V, or to a battery.

Figure 5 shows the second transmitter/receiver 30, the task of which is to manage the monitoring and control of an illumination system. In more detail, the second transmitter/receiver 30 principally comprises the following parts:
- a radio module 31 for short-range radio communication
- a communication module 32 for communication with a fixed computer network over Ethernet
- a CPU unit with a memory part 23
- a database with records of illumination systems 34
- a power supply unit 35 intended to be connected to the public electricity supply at, for example, a grid voltage of 230 V.

Each second transmitter/receiver 30 is constructed to be a member of a radio network and to create and store in the database lists 50, 50:1, etc. of identification elements 10 and the IDs of light fittings that are members of various illumination groups in internal frames of reference 40:1-40:4 for a service region in an external frame of reference 40, see also Figure 2. Each second transmitter/receiver 30 can carry out search of identification elements 10 by broadcasting messages that request that identification elements 10 that are not associated with a network respond with their IDs. The second transmitter/receiver 30 can transmit a radio message directly to an identification element 10, but this normally takes place through the first transmitter/receiver 20 to the said identification element 10. When a response is received, the second transmitter/receiver 30 receives an ID for an identification element 10 with which contact has been established. The second transmitter/receiver 30 requests a distance vector from each first transmitter/receiver 20 to the identification element 10 in question. The said first transmitter/receiver 20 responds to the second transmitter/receiver 30 and provides information about the time vector for the identification element 10 in question. On the basis of this information, the second transmitter/receiver 30 calculates the position of the identification element 10 in question within the geographical region (the internal frame of reference), and determines in this way also whether the node is located within a defined service region 40; 40:1 (the external frame of reference). Due to the fact that the geographical location of each first transmitter/receiver 20 is known and that these positions form in this way a series of reference points, the position of the identification element 10 can be determined geographically and can be added to the protocol with absolute or relative coordinates, in, for example, a Cartesian coordinate system. If this is the case, and the identification element 10 is approved, the identification element is assigned a network address. After this, the second transmitter/receiver 30 retrieves information from its database 34 in the form of context for the relevant illumination group, of which the identification element 10 and thus also the associated light fitting are members.

The second transmitter/receiver 30 forwards a result of a search back to the database 34 in the form of a verification list. The verification information may contain information about the network address, such as 0.0.14.119.65.32, of an identification element 10 that has been located, and geographical coordinates with respect to the place at which the light fitting is located.

Each first transmitter/receiver 20 that is deployed at a specific geographical position in a coordinate system limits a service region in an external frame of reference 40 and one or several subregions in the form of internal frames of reference 40:1, 40:2, etc. It is appropriate that the said coordinate system is obtained from a computer-based CAD drawing, i.e. a computer-generated model with coordinates that represent graphically the surface of the service region with defined subsurfaces, i.e. compartments or zones whose light fittings are to be remotely controlled.

One of the major advantages of the system is that it knows at each moment where each object in the form of a point of illumination (light fitting) is located within a defined compartment of the premises, floor, etc. in a building. Through regular updates and broadcast search tasks between the transmitter/receiver, the system discovers whether light fittings have been moved, whereby each approved object is offered a specific contextual service. It is in this way possible to locate and control not only individual light fittings but also illumination groups in the desired manner, due to the fact that the identification elements associated with the light fittings can be queried, approved, and have a network address with the associated context assigned to them.

The invention is not limited to what has been described above and shown in the drawings: it can be changed and modified in several different ways within the scope of the innovative concept defined by the attached patent claims.

## Claims

1. An arrangement for the localisation and identification of objects in one or several service regions defined by wireless networks in a room, and access to a contextual service for an approved object in the room, including;
- one or several identification elements (10) that function at short-range radio frequencies and that are intended to be associated with the object that is to be identified and located in the room,
- a minimum of three first transmitters/receivers (20) that function at short-range radio frequencies and that, deployed in the room, limit a service region,
- first calculation means (23) for the localisation of identification elements (10) and the creation of measurement results based on the measured distance or direction to the identification element on the receipt of a response to a request from the said first transmitter/receiver (20),
- a second transmitter/receiver (30) that functions at short-range radio frequencies and that is arranged in the room for radio communication with the said first transmitter/receiver (20),
- second calculation means (33) for the calculation of the position of the identification element (10) based on measurement results that are obtained from each first transmitter/receiver (20),
**characterised in that**
- each identification element (10) comprises a CPU with a memory part and protocol stack (13),
- the limit service region comprises an external frame of reference (40) and one or several internal frames of reference (40:1-40:n) in the said external frame of reference, whereby the geographical location of each first transmitter/receiver is known to each frame of reference,
the second calculation means (33) can approve or reject the identification element (10) that has been identified, firstly, by determining whether the located identification element (10) lies within the external frame of reference (40), and secondly, by determining whether the located identification element lies within any internal frame of reference (40:1),
and in the event of approval,
- the second calculation means (33) can assign a pre-determined network address to the approved identification element (10), and
a pre-determined contextual service can be transferred from a database (34) that is associated with the second transmitter/receiver (30), to the approved identification element, wherein the said transferred data is stored in the memory part (13) of the identification element (10).

2. The arrangement according to claim 1, whereby the second calculation means (33 is integrated into the said second transmitter/receiver (30), and that measurement results for the calculation of the position of the identification element have been retrieved from the first calculation means (23) integrated in the said first transmitter/receiver (20).

3. The arrangement according to any one of claims 1-2, whereby the measurement results that the first calculation means (23) creates in each first transmitter/receiver (20) are constituted by vector data in the room, including the mathematical parameters time and signal strength or magnitude and direction from the relevant first transmitter/receiver (20) to the identification element (10).

4. The arrangement according to claim 3, whereby the vector data that the first calculation means (23) creates in each first transmitter/receiver (20) are time-based, in which also the mathematical parameters magnitude and direction include time vector data.

5. The arrangement according to claim 4, whereby the second calculation means (33) of each second transmitter/receiver (30) calculates the position of the identification element in the room, based on the time-based vector data that have been received from the first transmitter/receiver (20).

6. The arrangement according to claim 5, whereby on the basis of the specified network address of the identification element (10), a pre-determined contextual service is transferred from the database (34) that is associated with each second transmitter/receiver (30), to an approved identification element.

7. The arrangement according to any one of claims 1-6, comprising first and second calculation means (23, 33) for the localisation of an identification element (10) and the creation of measurement results that are based on trilateration, whereby the relative or the absolute difference in the time it takes for a signal from the identification element, on its response to a request, to propagate from the identification element to each first transmitter/receiver (20) that has transmitted the request is measured.

8. The arrangement according to any one of claims 1-7, whereby communication between each second transmitter/receiver (30) and an identification element (10) is linked through each first transmitter/receiver (20).

9. The arrangement according to any one of claims 1-8, whereby each second transmitter/receiver (30) comprises means (32) for data communication with an external network over, for example, Ethernet.

10. The arrangement according to claim 1, wherein the object with which an identification element (10) is intended to be associated comprises a physical individual.

11. The arrangement according to claim 1, whereby the object with which an identification element (10) is intended to be associated comprises a light fitting.

12. The arrangement according to claim 11, whereby the identification element (10) has a communication module (12) that allows the sharing of one or several of the following operational and control data: power and driving voltage, with the operating electronic circuits of the light fitting.

## Patentansprüche

1. Vorrichtung für die Lokalisierung und Identifikation von Gegenständen in einem oder mehreren Dienstbereichen definiert von drahtlosen Netzen in einem Raum und Zugang zu einem kontextuellen Dienst für einen zugelassenen Gegenstand im Raum, hierunter;
- ein oder mehrere Identifikationselemente (10), welche bei Funkfrequenzen mit kurzer Reichweite funktionieren, und welche dem im Raum zu identifizierenden und zu lokalisierenden Gegenstand zugewiesen werden sollen,
- ein Minimum an drei ersten Sendern/Empfängern (20), welche bei Funkfrequenzen mit kurzer Reichweite funktionieren, und welche, im Raum angebracht, einen Dienstbereich begrenzen,
- ein erstes Berechnungsmittel (23) für die Lokalisierung von Identifikationselementen (10) und die Erzeugung von Messergebnissen auf Grundlage des gemessenen Abstands oder der Richtung zum Identifikationselement beim Empfang einer Antwort auf eine Anfrage vom ersten Sender/Empfänger (20),
- einen zweiten Sender/Empfänger (30), welcher bei Funkfrequenzen mit kurzer Reichweite funktioniert, und welcher im Raum für die Funkkommunikation mit dem ersten Sender/Empfänger (20) angeordnet ist,
- ein zweites Berechnungsmittel (33) für die Berechnung der Position des Identifikationselements (10) auf Grundlage von aus jedem ersten Sender/Empfänger (20) erhaltenen Messergebnissen,
**dadurch gekennzeichnet, dass**
- jedes Identifikationselement (10) eine CPU mit einem Speicherteil und einem Protokollstack (13) umfasst,
- der begrenzte Dienstbereich einen externen Referenzrahmen (40) und einen oder mehrere interne Referenzrahmen (40:1-40:n) in dem externen Referenzrahmen umfasst, wobei der geographische Ort jedes ersten Senders/Empfängers jedem Referenzrahmen bekannt ist,
das zweite Berechnungsmittel (33) das Identifikationselement (10), welches identifiziert worden ist, zulassen oder ablehnen kann, indem zuerst bestimmt wird, ob das angeordnete Identifikationselement (10) sich im externen Referenzrahmen (40) befindet, und indem zweitens bestimmt wird, ob das angeordnete Identifikationselement in einem internen Referenzrahmen (40:1) liegt,
und im Falles des Zulassens,
- das zweite Berechnungsmittel (33) dem zugelassenen Identifikationselement (10) eine vorgegebene Netzadresse zuweisen kann, und
ein vorgegebener kontextueller Dienst von einer dem zweiten Sender/Empfänger (30) zugewiesenen Datenbank (34) an das zugelassene Identifikationselement übertragbar ist, wobei die übertragenen Daten im Speicherteil (13) des Identifikationselements (10) gespeichert werden.

2. Vorrichtung nach Anspruch 1, wobei das zweite Berechnungsmittel (33) in den zweiten Sender/Empfänger (30) integriert ist, und dass Messergebnisse für die Berechnung der Position des Identifikationselements vom ersten in den ersten Sender/Empfänger (20) integrierten Berechnungsmittel (23) abgerufen worden sind.

3. Vorrichtung nach einem der Ansprüche 1-2, wobei die Messergebnisse, die vom ersten Berechnungsmittel (23) in jedem ersten Sender/Empfänger (20) erzeugt werden, durch Vektordaten im Raum, einschließlich der mathematischen Parameter Zeit und Signalstärke oder Größe und Richtung vom relevanten ersten Sender/Empfänger (20) zum Identifikationselement, (10), gebildet werden.

4. Vorrichtung nach Anspruch 3, wobei die Vektordaten, die vom ersten Berechnungsmittel (23) in jedem ersten Sender/Empfänger (20) erzeugt werden, zeitbezogen sind, wobei auch die mathematischen Parameter Größe und Richtung Zeitvektordaten mit einschließen.

5. Vorrichtung nach Anspruch 4, wobei das zweite Berechnungsmittel (33) jedes zweiten Senders/Empfängers (30) die Position des Identifikationselements im Raum auf Grundlage der zeitbezogenen Vektordaten, die vom ersten Sender/Empfänger (20) empfangen worden sind, berechnet.

6. Vorrichtung nach Anspruch 5, wobei auf Grundlage der spezifischen Netzadresse des Identifikationsmittels (10) ein vorgegebener kontextueller Dienst von der jedem zweiten Sender/Empfänger (30) zugewiesenen Datenbank (34) an ein zugelassenes Identifikationselement übertragen wird.

7. Vorrichtung nach einem der Ansprüche 1-6, umfassend ein erstes und zweites Berechnungsmittel (23, 33) für die Lokalisierung eines Identifikationselements (10) und die Erzeugung von auf Trilateration beruhenden Messergebnissen, wobei die relative oder die absolute Differenz in der Zeit, die ein Signal vom Identifikationselement in seiner Antwort auf eine Anfrage benötigt, um sich vom Identifikationselement auf jeden ersten Sender/Empfänger (20) auszubreiten, der die Anfrage übertragen hat, gemessen wird.

8. Vorrichtung nach einem der Ansprüche 1-7, wobei die Kommunikation zwischen jedem zweiten Sender/Empfänger (30) und einem Identifikationselement (10) durch jeden ersten Sender/Empfänger (20) verknüpft wird.

9. Vorrichtung nach einem der Ansprüche 1-8, wobei jeder zweite Sender/Empfänger (30) Mittel (32) für die Datenkommunikation mit einem externen Netz über beispielsweise ein Ethernet umfasst.

10. Vorrichtung nach Anspruch 1, wobei der Gegenstand, dem ein Identifikationselement (10) zugewiesen werden soll, ein physisches Individuum umfasst.

11. Vorrichtung nach Anspruch 1, wobei der Gegenstand, dem ein Identifikationselement (10) zugewiesen werden soll, einen Beleuchtungskörper umfasst.

12. Vorrichtung nach Anspruch 11, wobei das Identifikationselement (10) ein Kommunikationsmodul (12) aufweist, welches den Austausch von einer oder mehreren der folgenden Betriebs- und Steuerdaten erlaubt: Strom und Steuerspannung mit den elektronischen Betriebsschaltungen des Beleuchtungskörpers.

## Revendications

1. Dispositif pour la localisation et l'identification d'objets dans une ou plusieurs régions de service définies par les réseaux sans fil dans un espace, et l'accès à un service contextuel d'un objet approuvé dans l'espace, comprenant;
- un ou plusieurs éléments d'identification (10) qui fonctionnent à des fréquences radio à courte portée et qui sont destinés à être associés à l'objet qui doit être identifié et localisé dans l'espace,
- un minimum de trois premiers émetteurs/récepteurs (20) qui fonctionnent à des fréquences radio à courte portée et qui, déployés dans l'espace, limitent une région de service,
- premier moyen de calcul (23) pour la localisation d'éléments d'identification (10) et la création de résultats de mesure sur la base de la distance mesurée ou de la direction de l'élément d'identification à la réception d'une réponse à une demande provenant dudit premier émetteur/récepteur (20),
- un deuxième émetteur/récepteur (30) qui fonctionne à des fréquences radio à courte portée et qui est disposé dans l'espace pour une communication radio avec ledit premier émetteur/récepteur (20),
- deuxième moyen de calcul (33) pour le calcul de la position de l'élément d'identification (10) sur la base de résultats de mesure qui sont obtenus à partir de chaque premier émetteur/récepteur (20),
**caractérisé en ce que**
- chaque élément d'identification (10) comprend une UCT avec une partie de mémoire et une pile de protocoles (13),
- la région de service de limite comprend un cadre de référence extérieur (40) et un ou plusieurs cadres de référence intérieurs (40:1-40:n) dans ledit cadre de référence extérieur, la location géographique de chaque premier émetteur/récepteur étant connue à chaque cadre de référence,
le deuxième moyen de calcul (33) peut approuver ou rejeter l'élément d'identification (10) qui a été identifié, d'une part, en déterminant si l'élément d'identification (10) localisé se trouve à l'intérieur du cadre de référence extérieur (40), et d'autre part, en déterminant si l'élément d'identification localisé se trouve à l'intérieur de n'importe quel cadre de référence intérieur (40:1),
et en cas d'approbation,
- le deuxième moyen de calcul (33) peut attribuer une adresse de réseau prédéterminée à l'élément d'identification approuvé (10), et
un service contextuel prédéterminé peut être transféré à partir d'une base de données (34), qui est associée à chaque deuxième émetteur/récepteur (30), vers l'élément d'identification approuvé, lesdites données transférées étant stockées dans la partie de mémoire (13) de l'élément d'identification (10).

2. Dispositif selon la revendication 1, dans lequel le deuxième moyen de calcul (33) est intégré dans le deuxième émetteur/récepteur (30), et que les résultats de mesure pour le calcul de la position de l'élément d'identification ont été récupérés à partir dudit premier émetteur/récepteur (23) intégré dans ledit premier émetteur/récepteur (20).

3. Dispositif selon l'une quelconque des revendications 1 à 2, dans lequel les résultats de mesure que le moyen de calcul (23) crée dans chaque premier émetteur/récepteur (20) sont constitués par des données vectorielles dans l'espace, y compris le temps et la puissance de signal ou l'amplitude et la direction des paramètres mathématiques à partir du premier émetteur/récepteur pertinent (20) vers l'élément d'identification (10).

4. Dispositif selon la revendication 3, dans lequel les données vectorielles que le premier moyen de calcul (23) crée dans chaque premier émetteur/récepteur (20) sont en fonction du temps, également l'amplitude et la direction des paramètres mathématique comprenant des données vectorielles temporelles.

5. Dispositif selon la revendication 4, dans lequel le deuxième moyen de calcul (33) de chaque deuxième émetteur/récepteur (30) calcule la position de l'élément d'identification dans l'espace, sur la base des données vectorielles temporelles qui ont été reçues du premier émetteur/récepteur (20).

6. Dispositif selon la revendication 5, dans lequel sur la base de l'adresse de réseau spécifiée de l'élément d'identification (10), un service contextuel prédéterminé est transféré à partir de la base de données (34) qui est associée à chaque deuxième émetteur/récepteur (30), à un élément d'identification approuvé.

7. Dispositif selon l'une quelconque des revendications 1 à 6, comprenant les premier et deuxième moyens de calcul (23, 33) pour la localisation d'un élément d'identification (10) et la création de résultats de mesures qui sont basés sur trilatération, la différence absolue ou relative dans le temps nécessaire pour un signal provenant de l'élément d'identification, de sa réponse à une demande, de se propager depuis l'élément d'identification à chaque premier émetteur/récepteur (20) qui a transmis la demande étant mesurée.

8. Dispositif selon l'une quelconque des revendications 1 à 7, dans lequel la communication entre chaque deuxième émetteur/récepteur (30) et un élément d'identification (10) est reliée à travers chaque premier émetteur/récepteur (20).

9. Dispositif selon l'une quelconque des revendications 1 à 8, dans lequel chaque deuxième émetteur/récepteur (30) comprend des moyens (32) pour la communication de données avec un réseau extérieur via, par exemple, Ethernet.

10. Dispositif selon la revendication 1, dans lequel l'objet avec lequel un élément d'identification (10) est destiné à être associé comprend un individu physique.

11. Dispositif selon la revendication 1, dans lequel l'objet avec lequel un élément d'identification (10) est destiné à être associé comprend un dispositif d'éclairage.

12. Dispositif selon la revendication 11, dans lequel l'élément d'identification (10) comporte un module de communication (12) qui permet le partage d'une ou de plusieurs des données de fonctionnement et de commande suivantes: la puissance et de la tension d'entraînement, avec les circuits électroniques fonctionnant du dispositif d'éclairage.
